# EUROPÄISCHE PATENTSCHRIFT

(11) **EP 1 711 715 B1**
(45) Veröffentlichungstag und Bekanntmachung des Hinweises auf die Patenterteilung: **05.03.2008**
(21) Anmeldenummer: 05701370.8
(22) Anmeldetag: 07.02.2005
(51) Int. Cl.: F15B 13/02

(54) **MESSBLENDENANORDNUNG FÜR EIN HYDRAULISCHES STROMTEIL- UND STROMSUMMIERGERÄT**
METERING ORIFICE ARRANGEMENT FOR A HYDRAULIC CURRENT DIVIDER AND CURRENT ADDING DEVICE
SYSTEME DIAPHRAGME DE MESURE D'UN APPAREIL HYDRAULIQUE DE DIVISION ET D'ADDITION DE DEBIT

(30) Priorität: 05.02.2004 DE 102004005692; 22.04.2004 DE 102004020184
(43) Veröffentlichungstag der Anmeldung: 18.10.2006
(73) Patentinhaber: Bosch Rexroth AG, 70184 Stuttgart (DE)
(72) Erfinder: KRUG-KUSSIUS, Karl, 97786 Karsbach (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/EP2005/001217
(87) Internationale Veröffentlichungsnummer: WO 2005/075834

(56) Entgegenhaltungen:
- DE-A1- 3 117 815
- US-A- 4 564 039
- PATENT ABSTRACTS OF JAPAN Bd. 2000, Nr. 24, 11. Mai 2001 (2001-05-11) -& JP 2001 182707 A (TEKUNOORU:KK), 6. Juli 2001 (2001-07-06)

## Beschreibung

Die Erfindung betrifft eine Messblendenanordnung gemäß dem Oberbegriff des Patentanspruches 1 sowie ein mit einer derartigen Messblendenanordnung ausgeführtes Stromteil- und Stromsummiergerät.

Hydraulische Stromteiler sorgen dafür, dass ein gegebener Druckmittelstrom lastdruckunabhängig in gewünschten Teilmengen über mehrere parallel zueinander angeordnete hydraulische Verbraucher oder hydraulische Lasten fließt. Wenn der Druckmittelstrom derart gerichtet ist, dass die einzelnen Stromventile des Stromteilers stromauf der hydraulischen Verbraucher angeordnet sind, spricht man vom Betriebszustand Teilen. Liegen die einzelnen Stromventile dagegen stromab der hydraulischen Verbraucher, spricht man vom Betriebszustand Summieren.

Jedes Stromventil eines Stromteilers umfaßt eine Meßblende und eine Druckwaage, die beim Teilen stromab der Meßblende liegt. Die Druckwaagen werden beim Teilen in Schließrichtung vom höchsten Lastdruck beaufschlagt und drosseln zwischen der jeweiligen Zumessblende und der Last den Fluidstrom so stark an, dass der Druck nach allen Zumessblenden gleich dem höchsten Lastdruck ist oder leicht über diesem liegt. Hinsichtlich dieser Anordnung und der Druckbeaufschlagung der Druckwaagen gleicht ein Stromteiler einer sogenannten LUDV-Steuerung, wie sie zum Beispiel die WO 95/32364 zeigt und die ein Sonderfall einer Load Sensing Steuerung ist. Bei einer solchen Steuerung wird der höchste Lastdruck an eine Verstellpumpe gemeldet und diese so geregelt, dass in der Pumpenleitung ein um eine bestimmte Druckdifferenz Δp über dem Lastdruck liegender Pumpendruck herrscht. Bei einer LUDV-Steuerung bleibt die Aufteilung der einzelnen Teilströme auch bei einem Abfall des Pumpendrucks erhalten. Denn in diesem Fall der sogenannten Unterversorgung ändert sich an dem Druck stromab der Zumessblenden nichts. Vor allen Zumessblenden steht in gleicher Weise der abgefallene Pumpendruck an, so dass sich an allen Zumessblenden die Druckdifferenz in gleicher Weise verändert hat.

Stromteiler können unabhängig davon verwendet werden, ob als Druckmittelquelle eine Konstantpumpe oder eine Verstellpumpe benutzt wird und wie die Verstellpumpe verstellt wird. Beim Einsatz in einem Fahrantrieb wird die Fördermenge zum Beispiel in Abhängigkeit von der Auslenkung eines Joysticks oder eines Pedals eingestellt und dann durch den Stromteiler den hydraulischen Verbrauchern in den gewünschten Mengenverhältnissen zugeteilt.

Ein "Summieren" von Druckmittelteilmengen kann die Steuerung nach der WO 95/32364 nicht leisten. Beim Summieren muß nämlich dafür gesorgt werden, dass die Druckwaagen in Schließrichtung nicht mehr vom höchsten sondern vom niedrigsten der zwischen Druckwaagen und Verbraucher anstehenden Drücke beaufschlagt sind.

Ein Stromteiler für Teilen und Summieren ist aus der DE 195 31 497 A1 bekannt. Bei einer derartigen Steueranordnung sind die den Verbrauchern zugeordneten Druckwaagen über Zentrierfedern in eine Öffnungsstellung vorgespannt, wobei diese über ein Schaltventil im Betriebszustand "Teilen" mit dem höchsten Lastdruck und im Betriebszustand "Summieren" mit dem jeweils niedrigsten wirksamen Lastdruck beaufschlagt werden, so dass in beiden Betriebszuständen der Druckabfall über den Messblenden lastdruckunabhängig konstant gehalten werden kann.

Aus der DE 34 01 754 C2 ist ein hydraulisches Stromteil- und Summiergerät bekannt, bei dem jeweils einem Verbraucher, beispielsweise Hydromotoren eines Fahrantriebes eine Druckwaage zugeordnet ist, über die jeweils beim Teilen der Druck stromabwärts der festen Messblende auf den Lastdruck abgedrosselt wird.

In der DE 31 17 815 A1 ist ein Stromteil- und Summiergerät mit einer Messblendenanordnung offenbart, die einen gemeinsamen ersten pumpenseitigen Arbeitsanschluss und mehrere, verbraucherseitige zweite Arbeitsanschlüsse aufweist. Ein einziger Messblendenkolben dieser Messblendenanordnung ist über eine Zentrierfederanordnung in eine Schließstellung vorgespannt und hat zwei Steuerkanten, von denen eine beim Teilen und die andere beim Summieren wirksam ist. Eine rückseitige Stirnfläche des Messblendenkolbens taucht in einen Steuerraum ein, der mit einem Steuerdruck beaufschlagbar ist, der über eine sich zwischen dem ersten Arbeitsanschluss und dem Steuerraum erstreckende Steuerleitung mit einer festen Drossel und einem Rückschlagventil mit einem Steuerdruck beaufschlagt ist. Diese Steuerleitung ist über jeweils eine Blende mit den zweiten Arbeitsanschlüssen der Messblendenanordnung verbunden.

Bei den vorbeschriebenen, für einen Summier- und Teilenbetrieb geeigneten Lösungen befinden sich die Druckwaagenkolben der den Verbrauchern zugeordneten Druckwaagen abhängig vom individuellen Lastdruck in unterschiedlichen Regelpositionen. Üblicherweise werden die Druckwaagenkolben von einer vergleichsweise schwachen Feder, (Druckkraftäquivalent im Bereich von 1 bis 3 bar) in ihre Grundposition (beispielsweise in Grundstellung offen) beaufschlagt. In Betrieb (Teilen) befindet sich die Druckwaage des lastdruckniedrigsten Verbrauchers nahe der Steuerkante in einer Schließposition, so dass entsprechend die Feder dieser Druckwaage stärker gespannt ist als die Federn der anderen für die lastdruckhöheren Druckwaagen. So liegt beispielsweise die Spannung der Feder des lastdruckniedrigsten Verbrauchers bei 3 bar, während die des lastdruckhöchsten Verbrauchers dann bei 1,5 bar liegt. Diese unterschiedlichen Federspannungen führen zu unterschiedlichen Drücken im Bereich zwischen den jeweiligen Messblenden und den zugeordneten Druckwaagen, so dass auch der Druckabfall über den zugeordneten Messblenden und damit der Druckmittelvolumenstrom entsprechend variiert. D. h., bei einer Differenz in der Federvorspannung von 1,5 bar können die Druckdifferenzen an den einzelnen Messblenden auch entsprechend variieren. Diese aus den unterschiedlichen Druckwaagenfederspannungen resultieren-den Abweichungen sind dann vernachlässigbar, wenn der Druckabfall über der zugeordneten Messblende relativ groß ist. Bei einem kleinen Druckabfall über die Messblende sind die vorgenannten Schwankungen jedoch relativ gesehen groß und führen zu Fehlern bei der Aufteilung/Summierung der Verbrauchermengen. Dieser Mengenfehler kann beispielsweise bei Fahrantrieben zu einem unerwünschten Schlupf führen.

Dem gegenüber liegt der Erfindung die Aufgabe zugrunde, eine Messblendenanordnung und ein damit ausgeführtes hydraulisches Stromteil- und Stromsummiergerät zu schaffen, bei dem der Mengenfehler veränderbar ist.

Diese Aufgabe wird hinsichtlich der Messblendenanordnung durch die Merkmale des Patentanspruchs 1 und hinsichtlich des hydraulischen Stromteil- und Stromsummiergeräts durch die Merkmale des nebengeordneten Patentanspruchs 18 gelöst.

Erfindungsgemäß hat die Messblendenanordnung einen Messblendenkolben der eine oder mehrere veränderbare Messblenden für jede Stromrichtung steuert. Jede der veränderbaren Messblenden ist zwischen einem gemeinsamen ersten Anschluss (Pumpenanschluss) und einem verbraucherseitigem Arbeitsanschluss-angeordnet. Der Messblendenkolben ist einerseits vom Druck am Pumpenanschluss und andererseits von einer Feder und von einem Steuerdruck beaufschlagt, der über eine Druckteilerschaltung zwischen dem Pumpenanschluss und den Arbeitsanschlüssen abgegriffen wird. Bei der erfindungsgemäßen Lösung hat diese Druckteilerschaltung zumindest eine veränderbare Drossel, durch die der Druck im Steuerraum so einstellbar ist, dass sich der Messblendenquerschnitt in Abhängigkeit vom Druck am Pumpenanschluss verändern lässt. Zur Minimierung der eingangs beschriebenen Mengenfehler wird dann die variable Drossel so verändert, dass der Druck am Eingang der Messblende (Pumpenanschluss) erhöht wird und entsprechend der Druckabfall über den Messblenden ansteigt und somit der aus den unterschiedlichen Vorspannungen der Druckwaagenfedern resultierende Fehler relativ geringer ist. Mit dieser Lösung lässt sich beispielsweise der Schlupf eines Fahrantriebes bei ungünstigen Betriebsbedingungen mit minimalem vorrichtungstechnischen Aufwand auf ein Minimum reduzieren.

Der vergleichsweise große Fehler kann jedoch auch bewußt bei der Ansteuerung der angeschlossenen Verbraucher ausgenutzt werden, um beispielsweise einen Schlupf während des normalen Fahrbetriebs zuzulassen.

Erfindungsgemäß wird es besonders bevorzugt, wenn die veränderbare Drossel als stetig verstellbares Vorsteuerventil ausgeführt ist und eine Drossel mit konstantem Querschnitt im Steuerölströmungspfad zwischen dem ersten Anschluss (Pumpenanschluss) und dem Vorsteuerventil angeordnet ist.

Bei einem bevorzugten Ausführungsbeispiel der Erfindung ist ein Messblendenkolben in einer Messblendenbuchse geführt, in der jeweils einem Arbeitsanschluss, d.h. jeweils einem Verbraucher zugeordnete Fenster ausgebildet sind, die über den Messblendenkolben aufgesteuert sind. Der Querschnitt dieser Fenster bestimmt die Teilvolumenströme zu den einzelnen Verbrauchern.

Der Messblendenkolben hat bei einem bevorzugten Ausführungsbeispiel zwei Steuerkanten, von denen eine beim Teilen und die andere beim Summieren wirksam ist. Die Summieren-Steuerkante ist vorzugsweise durch eine Ringschulter des Messblendenkolbens ausgebildet.

Um beim Summieren Druckunterschiede möglichst gering zu halten, sind stirnseitig im Messblendenkolben eine Vielzahl von Axialbohrungen ausgebildet, die in einer die vorgenannte Ringschulter ausbildenden Ringnut münden, so daß gewährleistet ist, dass der Druck im Ringraum demjenigen am stirnseitigen Eingangs- oder Pumpenanschluß der Messblende entspricht.

Der Messblendenkolben begrenzt rückseitig einen Steuerraum, der über einen Steuerkanal mit dem Pumpenanschluss der Messblende verbunden ist. In diesem Steuerkanal ist die Düse der Druckteilerschaltung angeordnet.

Das Vorsteuerventil kann stufenförmig verstellbar ausgeführt sein, so dass die Abströmquerschnitte der Messblende entsprechend stufenförmig verändert werden.

Bei einem besonders bevorzugten Ausführungsbeispiel verzweigt die Steuerleitung stromabwärts des Vorsteuerventils, wobei in jeder zu einer Arbeitsleitung führenden Zweigleitung jeweils eine Blende angeordnet ist.

Die Messblendenanordnung ist besonders kompakt ausgebildet, wenn die den Messblendenkolben in seine Grundstellung vorspannende Zentrierfederanordnung an einem tassenförmigen Federteller angreift, wobei ein Endabschnitt einer Zentrierfeder der Zentrierfederanordnung in einen von einem Hemd des Federtellers begrenzten Aufnahmeraum eintaucht. Um ein Einschließen des Steueröls in diesem Aufnahmeraum zu verhindern, ist in dem Hemd eine Hemdbohrung ausgebildet.

Bei einer Variante der Erfindung soll die Steueranordnung mit einem Freilauf ausgeführt sein, bei dem alle Arbeitsleitungen miteinander verbunden sind. Dieser Freilauf lässt sich bei der erfindungsgemäßen Messblende sehr einfach dadurch realisieren, dass die Messblendenbuchse verschiebbar in einer Ventilbohrung eines Ventilgehäuses geführt ist und sich über einen Steuerdruck aus einer Grundposition in eine Position verschieben lässt, in der die sich an die Fenster der Messblendenbuchse anschließenden Kanäle im Ventilgehäuse durch die Messblendenbuchse freigegeben und somit kurzgeschaltet sind.

Der Freilauf kann durch Festlegen der Messblendenbuchse mittels einer Verschlussschraube blockiert werden.

Die Messblendenanordnung ist besonders kompakt ausgebildet, wenn die Achse des Vorsteuerventils rechtwinklig zur Messblendenachse verläuft.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 ein Schaltbild einer LUDV-Steueranordnung zur Versorgung zweier Verbraucher;
Figur 2 eine schematische Darstellung einer veränderlichen und mehreren Verbrauchern zugeordneten Messblende;
Figur 3 eine Schnittdarstellung eines konkreten Ausführungsbeispiels einer Messblende gemäß Figur 1;
Figur 4 eine Detaildarstellung der veränderlichen Messblende aus Figur 3;
Figur 5 ein Schaltschema einer Steueranordnung, bei der jedem Verbraucher eine veränderliche Meßblende zugeordnet ist und
Figur 6 einen Ventilblock für eine Schaltung gemäß Figur 5.

Das erfindungsgemäße Konzept ist insbesondere bei hydrostatisch angetriebenen Maschinen mit geschlossenem oder offenem hydraulischen Kreislauf einsetzbar, wobei ein Anwendungsschwerpunkt bei rotatorischen Antrieben, beispielsweise Fahrantrieben, Windenantrieben oder Bandantrieben liegt.

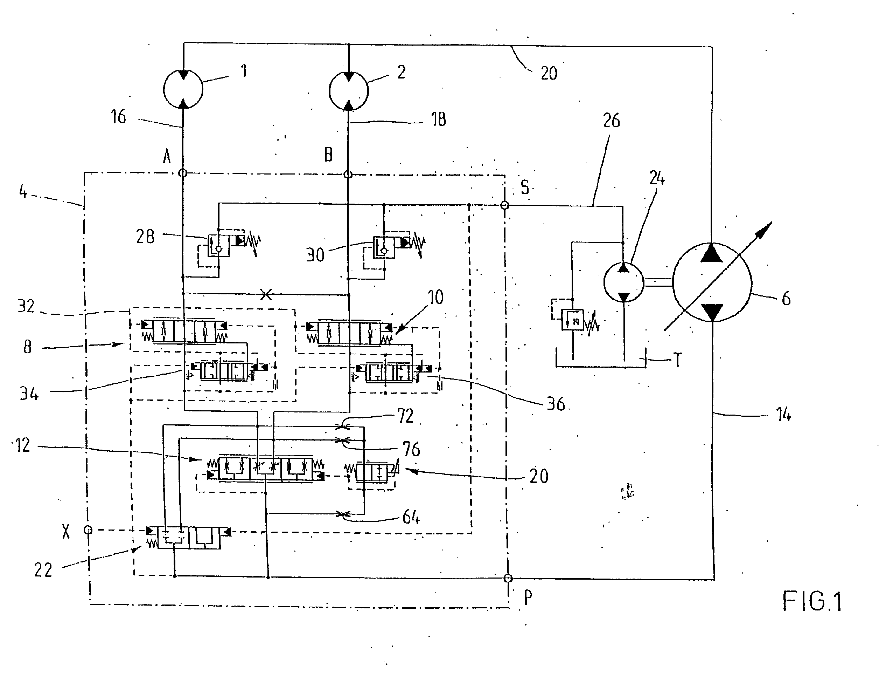

Figur 1 zeigt beispielhaft ein Schaltschema einer Steueranordnung für einen Fahrantrieb eines mobilen Arbeitsgerätes. Die Steueranordnung ist als geschlossener Kreislauf ausgeführt, wobei der Fahrantrieb zwei Hydromotoren 1, 2 hat, die über einen Mobilsteuerblock 4 mit einer Verstellpumpe 6 verbunden sind. Die Druckmittelverteilung von der Verstellpumpe 6 zu den Hydromotoren 1, 2 erfolgt über den Mobilsteuerblock 4, wobei jedem Hydromotor 1, 2 eine Individual-Druckwaage 8, 10 zugeordnet ist. Den beiden Druckwaagen 8, 10 ist eine veränderliche Messblendenanordnung vorgeschaltet, die im Folgenden verkürzt als Messblende 12 bezeichnet ist und über die ein von der Verstellpumpe 6 in eine Zulaufleitung 14 geförderter Druckmittelvolumenstrom in zwei Teilströme aufgeteilt wird, die über zwei Arbeits- oder Vorlaufleitungen 16, 18 zu den Hydromotoren 1, 2 geführt sind. Von den Hydromotoren führt dann eine Ablaufleitung 20 zurück zur Verstellpumpe 6.

Bei dem dargestellten Ausführungsbeispiel ist die den beiden Druckwaagen 8, 10 zugeordnete Messblende 12 vorgesteuert ausgeführt, wobei der Steuerdruck zwischen einem als verstellbare Drossel wirkenden, proportional verstellbaren Vorsteuerventil 20 und einer Düse 64 abgegriffen wird, die gemeinsam als Druckteiler wirken. Des Weiteren ist der Messblende 12 eine Freilaufeinrichtung 22 zugeordnet, über die sich die beiden Vorlaufleitungen 16, 18 miteinander verbinden lassen.

Bei dem im Folgenden beschriebenen Ausführungsbeispiel sind die Freilaufeinrichtungen 22, das Vorsteuerventil 20 und die Messblende 12 in einer Ventileinrichtung integriert.

Der Verstellpumpe 6 ist eine Hilfspumpe 24 zugeordnet, über die Druckmittel aus einem Tank T in eine Einspeiseleitung 26 gefördert werden kann, die über zwei Druckeinspeiseventile 28 bzw. 30 mit den beiden Vorlaufleitungen 16, 18 verbunden ist. Über diese Druckeinspeiseventile 28, 30 kann beispielsweise bei einer ziehenden Last (Bergabfahrt) zur Vermeidung von Kavitationen in den Vorlaufleitungen 16, 18 Druckmittel aus dem Tank T nachgesaugt werden. Über die beiden Druckeinspeiseventile 28, 30 ist des Weiteren der Druck in der Vorlaufleitung 16 bzw. 18 auf einen Maximalwert begrenzt, so dass die Verbraucher gegen Überlast gesichert sind.

Die Steueranordnung gemäß Figur 1 soll im Betriebszustand "Teilen" und im Betriebszustand "Summieren" betrieben werden. Beim Teilen-Betriebszustand wird der Druckmittelvolumenstrom in der Zulaufleitung 14 über die Messblende 12 in Teilvolumenströme aufgeteilt und über die Druckwaagen 8, 10 zu den zugeordneten Verbrauchern 1 bzw. 2 geführt. Dabei wird über die Druckwaagen 8, 10 der Druckabfall über der gemeinsamen Messblende 12 lastdruckunabhängig konstant gehalten, so dass die Druckmittelvolumenströme durch die Messblende 12 nur von deren individuell für jeden Verbraucher ausgebildeten Öffnungsquerschnitten abhängen.

Der Grundaufbau der beiden in der Grundstellung offenen Druckwaagen 8, 10 ist in der älteren Patentanmeldung DE 10 2004 001253 offenbart, so dass hier nur die zum Verständnis der Erfindung wesentlichen Merkmale erläutert werden und im übrigen auf die genannte ältere Patentanmeldung oder deren Priortätsnachanmeldungen verwiesen wird. Diese Druckwaagen 8, 10 weisen zwei Steuerkanten auf, von denen eine beim Betriebszustand "Summieren" und die andere beim Betriebszustand "Teilen" wirksam ist. Die Druckwaagen haben des Weiteren zumindest eine LS-Steuerkante, über die bei geöffneter Druckwaage 28, 30 ein LS-Querschnitt aufsteuerbar ist, über den ein dem Lastdruck entsprechender Druck in eine Lastmeldeleitung 32 gemeldet wird. Die beiden genannten Steuerkanten sind jeweils mittels eines Wegeventils 34, 36 ausgebildet, das in die Druckwaage 8 bzw. 10 integriert ist.

Durch diese Ausgestaltung der Druckwaage 8, 10 ist sichergestellt, dass im Betriebszustand "Teilen" ein dem höchsten Lastdruck und im Betriebszustand "Summieren" ein dem niedrigsten Lastdruck entsprechender Druck in die Lastmeldeleitung 32 gemeldet wird.

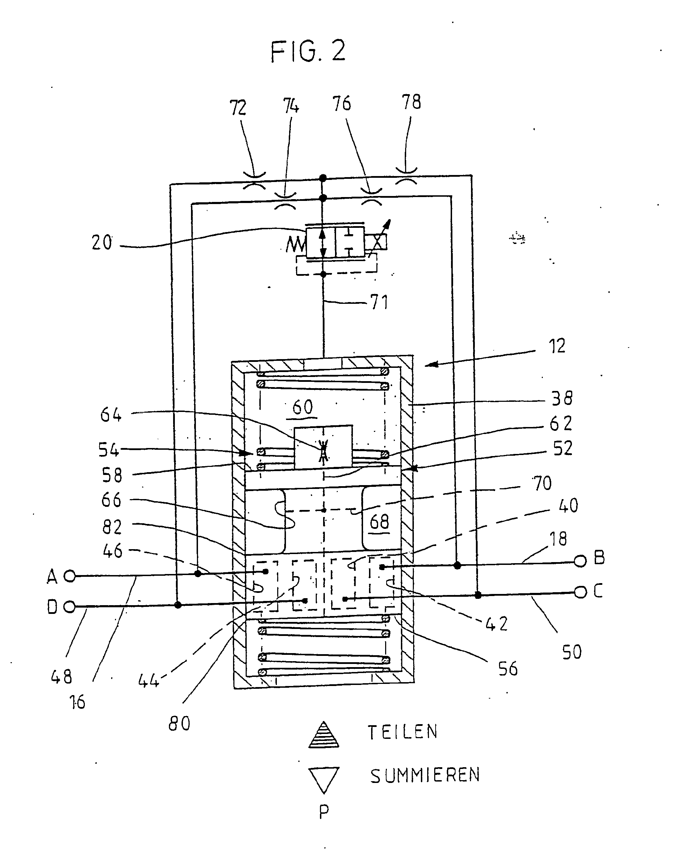

Figur 2 zeigt eine stark schematisierte Darstellung einer Messblende 12, über die mehrere Verbraucher (gemäß Figur 2 vier Verbraucher) mit Druckmittel versorgbar sind und wie sie im Prinzip bei einer Schaltung gemäß Figur 1 einsetzbar ist.

Die Messblende 12 hat eine Messblendenbuchse 38, die in eine Ventilbohrung des Mobilsteuerblocks 4 eingesetzt ist. An der Messblendenbuchse 38 sind vier Fenster 40, 42, 44, 46 ausgebildet, die jeweils über Vorlaufleitungen 16, 18, 48, 50 mit Arbeitsanschlüssen A, B, C, D des Mobilsteuerblocks 4 verbunden sind. An diese Arbeitsanschlüsse A, B, C, D sind vier Verbraucher angeschlossen. Bei dem in Figur 1 dargestellten Ausführungsbeispiel ist die Messblende 12 nur mit zwei Fenstern 46, 42 ausgebildet, die mit den beiden Arbeitsleitungen 16, 18 verbunden sind, so dass zwei Verbraucher mit Druckmittel versorgbar sind.

In der Messblendenbuchse 38 ist ein Messblendenkolben 52 axial verschiebbar geführt, der über eine Zentrierfederanordnung 54 in eine Grundposition vorgespannt ist. Bei dem in Figur 2 dargestellten Ausführungsbeispiel ist die Zentrierfederanordnung 54 durch zwei Federn ausgebildet, die an den beiden Stirnflächen der Kolben angreifen und stirnseitig in der Messblendenbuchse 38 abgestützt sind.

In dieser Grundposition sind die Fenster 40 bis 46 vom Messblendenkolben 52 verschlossen, so dass über die Fenster 40 bis 46 keine Verbindung zwischen dem stirnseitigen Eingangsanschluss der Messblende 12 und den Vorlaufleitungen 16, 18, 48, 50 besteht. Der stirnseitige Anschluss P der Messblende 12 ist an die Zulaufleitung 14 angeschlossen ist. Somit wird die in Figur 2 unten liegende Stirnfläche 56 des Messblendenkolbens 52 mit dem Druck in der Zulaufleitung 14 beaufschlagt. Die in Figur 2 oben liegende Stirnfläche 58 des Messblendenkolbens 52 begrenzt einen Steuerraum 60, der über einen den Druckwaagenkolben 52 durchsetzenden Steuerkanal 62 und die Düse 64 mit dem stirnseitigen Anschluss P (unten in Figur 2) der Messblendenbuchse 38 verbunden ist.

Gemäß Figur 2 hat der Messblendenkolben 52 des Weiteren eine Ringnut 66, die gemeinsam mit der Innenumfangsfläche der Messblendenbuchse 38 einen Ringraum 68 begrenzt. Im Bereich des Ringraums 68 ist im Messblendenkolben 52 eine Querbohrung 70 ausgebildet, die einen schnellen Druckausgleich zwischen einzelnen Abschnitten des Ringraums 68 ermöglicht.

Der Steuerraum 60 ist durch eine sich verzweigende Steuerleitung 71 mit den vorgenannten Vorlaufleitungen 16, 18, 48, 50 verbunden. Vor der Aufzweigung ist in der Steuerleitung 71 das proportional verstellbare Vorsteuerventil 20 ausgebildet, das mit der Düse 64 eine Druckteilerschaltung bildet. Der Druck im Steuerraum 60 entspricht dem Druck zwischen dem Vorsteuerventil 20 und der Düse 64. Alternativ zur proportionalen Verstellung kann auch eine stufenartige Verstellung der Öffnung des Vorsteuerventils vorgesehen werden.

Dieses Vorsteuerventil 20 ist mittels einer Feder in eine Öffnungsposition vorgespannt und lässt sich durch Bestromung eines Proportionalmagneten kontinuierlich oder stufenförmig schließen, so dass die Steuerölströmung vom Anschluss P hin zu den Vorlaufleitungen 16, 18, 48, 50 durch Einstellung des Vorsteuerventils 20 und entsprechend der im Steuerraum 60 wirksame Druck geändert werden können. Um ein ungehindertes Abströmen des Steueröls vom Steuerraum 60 über das Vorsteuerventil 20 zu vermeiden, ist in jeder Zweigleitung eine zusätzliche Blende 72, 74, 76, 78 angeordnet. Bei einer derartigen Schaltung entstehen keinerlei Verluste durch abströmendes Steueröl, da dieses jeweils in den Druckmittelstrom zurückgeführt wird.

Durch die Stirnfläche 56 wird eine Teilen-Steuerkante 80 ausgebildet, über die bei Anstieg des Drucks am Anschluss P die Fenster 40, 42, 44, 46 aufsteuerbar sind. Im Betriebszustand "Summieren" ist der Öffnungsquerschnitt der Fenster 40, 42, 44, 46 durch eine Steuerkante 82 bestimmt, die durch eine Ringstirnfläche der Ringnut 66 gebildet ist.

Im Betriebszustand "Teilen" wirkt der Druck am Druckanschluss P auf die untere Stirnfläche 56 in Öffnungsrichtung, während in Schließrichtung die Kraft der oberen Feder der Zentrierfeder 54 (entspricht etwa 2 bis 3 bar) und der Druck im Steuerraum 60 wirkt. Letzterer ist durch die Einstellung des Vorsteuerventils 20 veränderbar. Übersteigt der Druck am Druckanschluss P den Druck im Steuerraum plus das in Schließrichtung wirksame Druckkraftäquivalent der Zentrierfederanordnung 54, so wird der Messblendenkolben 52 aus seiner Grundposition heraus bewegt und in eine Regelposition verschoben, in der die Fenster 40, 42, 44, 46 zumindest abschnittweise aufgesteuert sind. Der Öffnungsquerschnitt der Fenster wird dabei über das Vorsteuerventil 20 bestimmt, über das der in Schließrichtung wirksame Druck im Steuerraum 60 einstellbar ist. D.h. durch Verstellen dieses Vorsteuerventils 20 lässt sich der Öffnungsquerschnitt der Fenster 40, 42, 44, 46 variieren, und entsprechend der Druck an Druckanschluss P verändern.

Der über den Druckanschluss P zur Messblende 12 strömende Druckmittelvolumenstrom wird dann über die Fenster 40, 42, 44, 46 in Teilströme aufgeteilt, die dann über die Vorlaufleitungen 16, 18, 48, 50 zu den angeschlossenen Verbrauchern geführt sind. Bei dem in Figur 1 dargestellten Ausführungsbeispiel wird über die mit lediglich zwei Fenstern 42, 46 ausgebildete Messblende 12 der Druckmittelvolumenstrom lediglich in zwei Teilströme hin zu den Hydromotoren 1, 2 aufgeteilt.

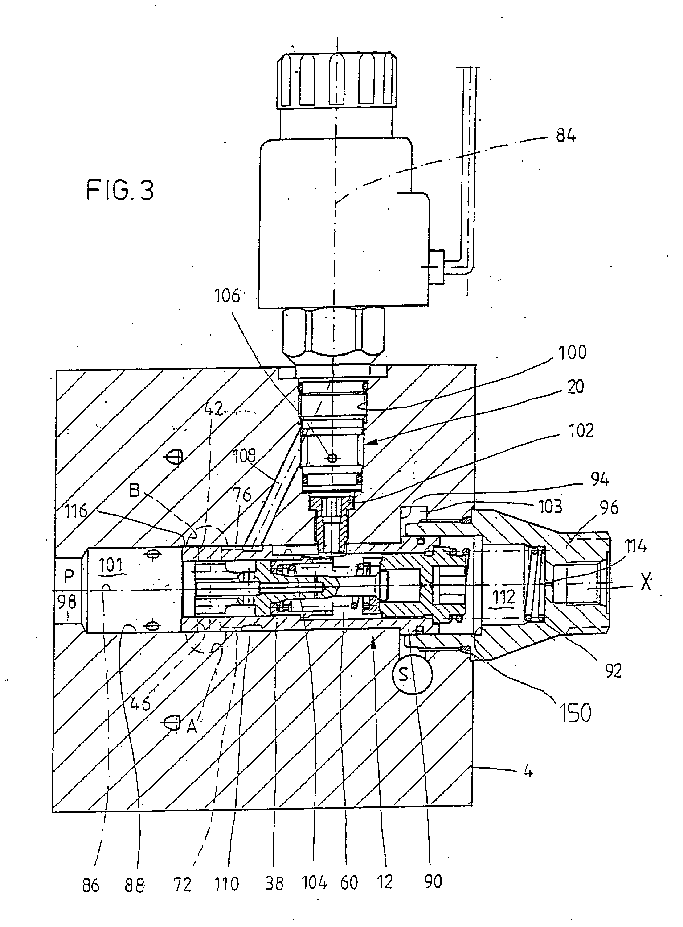

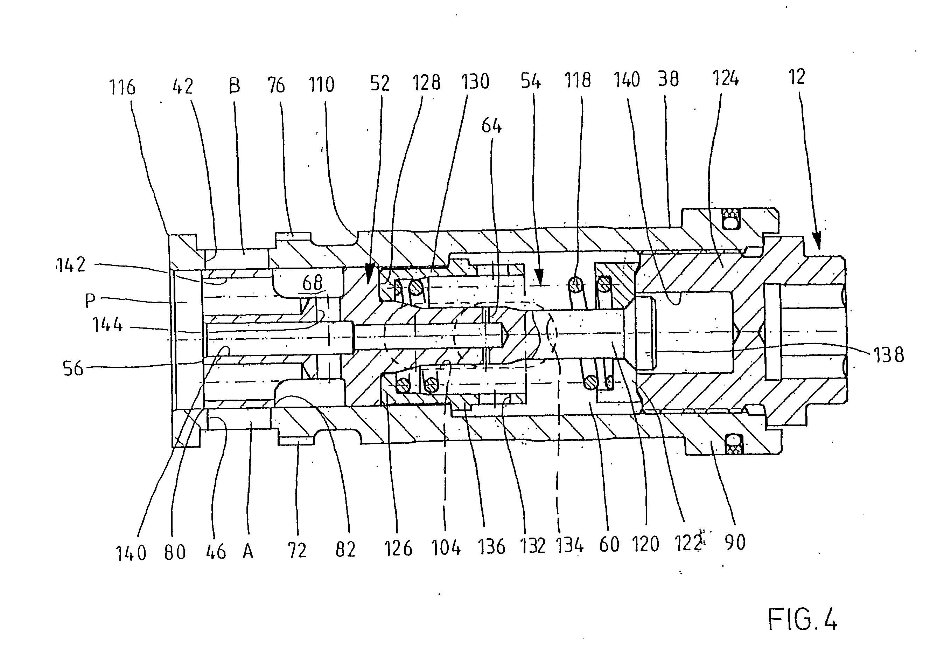

Die Freilaufeinrichtung 22 ist bei der schematischen Darstellung gemäß Figur 2 nicht berücksichtigt. Weitere Einzelheiten der Messblende werden nun anhand der Figuren 3 und 4 erläutert, die eine konkrete Ausgestaltung der Messblende 12 für eine Schaltung gemäß Figur 1 zeigen.

Figur 3 zeigt eine Schnittdarstellung des Mobilsteuerblocks 4, in den die Messblende 12 sowie das Vorsteuerventil 20 eingesetzt sind. Gemäß Figur 3 sind die beiden Achsen 84, 86 des Vorsteuerventils 20 und der Messblende 12 in einer Ebene senkrecht zueinander angeordnet. Die Messblendenbuchse 38 ist axial verschiebbar in eine Ventilbohrung 88 des Mobilsteuerblocks 4 eingesetzt und hat einen Radialvorsprung 90, der mit seiner in Figur 3 linken Ringstirnfläche über eine Feder 92 gegen eine Schulter 94 der Ventilbohrung 88 vorgespannt ist. Die Feder 92 ist ihrerseits an einer den rechten Endabschnitt der Ventilbohrung 88 verschließenden Verschlussschraube 96 abgestützt. Ein die Feder 92 aufnehmender Federraum 112 ist über eine Steuerbohrung 114 der Verschlussschraube 96 mit einem zu einem Steueranschluss X des Mobilsteuerblocks 4 (siehe Figur 1) führenden Kanal verbunden. Solange dieser Steuerdruck (Pumpendruck) am Steueranschluss X aufgeschaltet ist, verbleibt die Messblendenbuchse 38 in ihrer in Figur 3 dargestellten Position. Durch geeignetes Absenken oder Abschalten des Pumpendrucks am Steueranschluss X kann die Messblendenbuchse 38 durch den im Druckraum 103 anliegenden Speisedruck gegen die Kraft der Feder 92 nach rechts verschoben werden, so dass eine durch die benachbarte Ringstirnfläche der Messblendenbuchse 38 gebildete Freilaufsteuerkante 116 die beiden mit den Anschlüssen A und B verbundenen Kanäle im Mobilsteuerblock 4 kurzschließt, um einen Freilauf einzustellen, bei dem die Vorlaufleitungen 16, 18 hydraulisch miteinander verbunden sind. Der in der Freilaufschaltung entstehende Durchflusswiderstand liegt unter den Druckwaagen-Regelkräften, so dass die Druckwaagen 8, 10 nicht in die Regelposition wandern können. Es findet eine ungeregelte Mengenverteilung statt.

Gemäß Figur 3 durchsetzt die Ventilbohrung 88 den Mobilsteuerblock 4 in Horizontalrichtung (Ansicht nach Figur 3), wobei sich die Messblendenbuchse 38 nicht über die gesamte Axiallänge der Ventilbohrung 88 erstreckt, so dass links von einer Ringstirnfläche 98 der Messblendenbuchse ein Druckraum 101 verbleibt, in dem die Zulaufleitung 14 über einen im Mobilsteuerblock 4 ausgebildeten Zulaufkanal 98 mündet.

Das Vorsteuerventil 20 ist in eine Vorsteuerventilbohrung 100 eingesetzt und liegt stirnseitig an einer in die Vorsteuerventilbohrung 100 eingeschraubten Verdrehsicherung 102 an, die sich mit ihrem unteren Endabschnitt in die Ventilbohrung 88 hinein erstreckt und dabei in ein Langloch 104 der Messblendenbuchse 38 eintaucht. Die Verdrehsicherung 102 ist als Hohlbuchse ausgeführt, so dass der Steuerraum 60 der Messblende 12 mit dem Eingangsanschluss des Vorsteuerventils 20 verbunden ist. D.h. die Innenbohrung der Verdrehsicherung 102 bildet einen Teil der Steuerleitung 71.

Ein Ausgangsanschluss 106 des Vorsteuerventils 20 ist über einen Schrägkanal 108 mit der Ventilbohrung 88 verbunden. Im Mündungsbereich dieses Schrägkanals 108 ist am Außenumfang der Messblendenbuchse 38 eine Umfangsnut 110 ausgebildet, die über zwei gestrichelt angedeutete Längsschlitze mit den ebenfalls gestrichelt angedeuteten Fenstern 42, 46 verbunden sind. Diese Längsschlitze bilden praktisch die beiden Düsen 72, 76, über die der einen Teil der Steuerleitung 71 ausbildende Schrägkanal 108 von den mit den Arbeitsanschlüssen A, B verbundenen Kanälen getrennt ist.

Figur 4 zeigt eine vergrößerte Darstellung der Messblende 12 gemäß Figur 3. In der Messblendenbuchse 38 ist der Messblendenkolben 52 axial verschiebbar geführt und ist über die Zentrierfederanordnung 54 in seine dargestellte Grundposition vorgespannt, in der die beiden Fenster 46, 42 durch die Steuerkanten 80, 82 verschlossen sind. Die sich an die Fenster 46, 42 anschliessenden Ausnehmungen sind nicht durch Ringnuten sondern durch Abflachungen am Aussenumfang der Messblendenbuchse 38 ausgebildet. Dei Fläche der Abflachungen ist so gewählt, dass die Eckbereiche der rechteckigen Fenster 42, 44 nicht abgedeckt ist.

Die Zentrierfederanordnung 54 ist bei dem in Figur 4 dargestellten Ausführungsbeispiel durch eine einzige Zentrierfeder 118 ausgebildet, die einerseits über einen an einem Axialvorsprung 120 angreifenden Federteller 122 gegen eine den rechten Endabschnitt (Figur 4) der Ventilbohrung 88 verschließenden Verschlussstopfen 124 vorgespannt ist. Der andere Endabschnitt der Zentrierfeder 118 greift über einen tassenförmigen Federteller 126 an einer Radialschulter 128 an, über die der Außenumfang des Messblendenkolbens 52 zum Axialvorsprung 120 zurückgestuft ist. Ein radial erweiterter Endabschnitt 138 des Axialvorsprungs 120 taucht in eine Aufnahme 140 des Verschlussstopfens 124 ein, so dass die axiale Baulänge der Messblende 12 sehr kompakt gehalten ist.

In einem Hemd 130 des Federtellers 126 sind Hemdbohrungen 132 ausgebildet, so dass der vom tassenförmigen Federteller 126 umgriffene Raum mit dem den Federraum bildenden Steuerraum 60 verbunden ist, so dass kein Druckmittel in diesem vom Federteller 126 umgriffenen Raum angestaut werden kann.

Gemäß Figur 4 mündet das Langloch 104 über einen Durchbruch 134 im Steuerraum 60, so dass über diesen Durchbruch 134 und die Bohrung der Verdrehsicherung 102 eine Verbindung zum Eingangsanschluss des Vorsteuerventils 20 hergestellt ist.

Gemäß Figur 4 hat der Federteller an seinem Außenumfang eine Ringschulter 136, mit der er an einer entsprechenden Radialschulter der Messblendenbohrung anliegt, so dass der Messblendenkolben 52 über die beiden Federteller 122 und 126 in seine dargestellten Grundposition federnd vorgespannt ist.

Der Messblendenkolben 52 hat mittig eine Kolbenbohrung 140, die im Bereich des Axialvorsprungs 120 über zumindest eine Düsenbohrung in dem vom Federteller 126 umgriffenen Raum mündet. Diese Düsenbohrung bildet die Düse 64 gemäß Figur 2 aus.

Im Achsabstand zur Kolbenbohrung 140 sind in der Stirnfläche 56 des Messblendenkolbens 52 mehrere auf einem Teilkreis liegende Axialbohrungen 142 ausgebildet, die jeweils in dem Ringraum 68 münden, so dass der Druck am stirnseitigen Anschluss P auch in dem Ringraum 68 anliegt. Die Axialbohrung 140 ist des Weiteren auch über eine Querbohrung 144 mit dem Ringraum 68 verbunden, so dass ein schneller Druckausgleich sichergestellt ist, so dass der Druck im Ringraum 68 auch am Eingang der Düse 64 anliegt.

Bei dem in Figur 4 dargestellten Ausführungsbeispiel sind die Querschnitte der beiden Fenster 46, 42 identisch ausgeführt, so dass der Druckmittelvolumenstrom 50:50 aufgeteilt wird. Durch Variation der Fensterquerschnitte können prinzipiell auch andere Verteilungsverhältnisse eingestellt werden.

Beim Teilen liegt am stirnseitigen Pumpenanschluss P der Messblende 12 ein vergleichsweise hoher Druck (Pumpendruck) an, so dass der Messblendenkolben 52 in Abhängigkeit von der Kraft der Feder 118 und von dem im Steuerraum 60 über das Vorsteuerventil 20 eingestellten Steuerdruck in eine Öffnungsposition verschoben wird,
wobei die Steuerkante 80 die beiden Fenster 46, 42 aufsteuert.

In den meisten Fällen ist das Stromteil- und Stromsummiergerät mit der gemeinsamen Messblende und den individuellen Druckwaagen so eingestellt, dass ein vergleichsweise großer Fehler zugelassen wird und somit - bei einem Fahrantrieb - bewusst ein Schlupf zugelassen wird. In dem Fall, in dem der Schlupf auf ein Minimum reduziert werden soll, d. h., eine gleichmäßige Verteilung der Druckmittelvolumenströme auf die Verbraucher erfolgen soll, wird das Vorsteuerventil 20 in Schließrichtung verstellt. Wie eingangs erwähnt, wirkt dieses Vorsteuerventil 20 gemeinsam mit der Düse 64 im Messblendenkolben 52 als Druckteiler, so dass durch Zusteuern des Vorsteuerventils 20 der Steuerölstrom in der Steuerleitung 71 angestaut und entsprechend der Druck stromabwärts der Düse 64 ansteigt.

Der Messblendenkolben 52 befindet sich in einem Kräftegleichgewicht, wenn die durch den ersten Arbeitsanschluß P erzeugte Kraft genauso groß wie die Summe aus der Kraft der Feder 118 und der durch den Druck im Steuerraum 60 erzeugten Kraft ist. Der Unterschied zwischen dem Druck im ersten Arbeitsanschluß P und dem Druck im Steuerraum 60 ist also gleich dem Druckäquivalent der Feder 118. Wäre die Federkraft unabhängig von der Position des Messblendenkolbens 52, dann wäre der Druckunterschied, damit der Druckabfall über die Düse und damit die über die Düse 64 fliessende Steuerölmenge immer gleich. Bei gleicher Steuerölmenge kann der Druck im Steuerraum 60 dadurch verändert werden, dass der Durchflußquerschnitt des Vorsteuerventils 20 und damit der Druckabfall über das Vorsteuerventil 20 verändert werden. Macht man den Durchflußquerschnitt kleiner, muß der Druckabfall größer werden, da der Druck stromabwärts des Vorsteuerventils 20 durch die Druckwaagen 8, 10 festgelegt ist, muß der Druck stromaufwärts des Vorsteuerventils 20 ansteigen. Das Kräftegleichgewicht am Messblendenkolben 52 wird gestört, dieser bewegt sich in Schließrichtung und staut das Druckmittel am ersten Arbeitsanschluß P an, bis der Druck wieder um das Druckäquivalent der Feder 118 höher als der Druck im Steuerraum 60 ist.

Nun ist jedoch die Federkraft über den Weg des Messblendenkolbens 52 nicht konstant. Wenn sich dieser aufgrund einer Verkleinerung des Durchflußquerschnittes des Vorsteuerventils 20 in Schließrichtung bewegt, wird die Feder 118 etwas entspannt und damit die Federkraft verkleinert. Für das Kräftegleichgewicht am Messblendenkolben 52 ist kein so großer Unterschied zwischen dem Druck am ersten Arbeitsanschluß P und dem Steuerraum 60 mehr notwendig. Der Druckabfall über die Düse 64 und damit auch der Steuerölstrom werden geringer. Diese Verringerung des Steuerölstroms wirkt teilweise der Verkleinerung des Durchflußquerschnitts des Vorsteuerventils 20 entgegen, da ein kleinerer Steuerölstrom auch einen kleineren Druckabfall über dem Vorsteuerventil 20 erzeugt. Um im Steuerraum 60 einen Druck anzustauen, der um eine gewünschte Differenz über dem Druck stromabwärts des Vorsteuerventils 20 liegt, muß diese demnach etwas mehr zugemacht werden, als dies bei einem konstanten Steuerölstrom der Fall wäre.

Der erhöhte Druck stromabwärts der Düse 64 liegt im Steuerraum 60 an und wirkt in Schließrichtung des Messblendenkolbens, so dass entsprechend der Messblendenquerschnitt zugesteuert wird. Wie eingangs erwähnt, führt dieses Zusteuern des Messblendenquerschnittes zu einem Aufstauen des Druckmittelvolumenstroms, so dass der Druck am Messblendeneingang (Pumpenanschluss P) ansteigt und entsprechend der Druckverlust über der Messblende erhöht wird, so dass der relative, durch die unterschiedliche Vorspannung der Druckwaagenfedern verursachte Fehler im Verhältnis zu der Druckdifferenz über der Messblende geringer ist und somit eine gleichmäßige Druckmittelverteilung gewährleistet ist.

Durch Verstellung des Vorsteuerventils 20 kann demnach der wirksame Druck im Steuerraum 60 verändert werden, so dass entsprechend der aufgesteuerte Querschnitt beeinflussbar ist. Die Verstellung des Vorsteuerventils 20 erfolgt bei dem in Figur 1 dargestellten Ausführungsbeispiel stromabhängig.

Bei Einstellung eines vergleichsweise großen Durchflussquerschnitts der Fenster 46, 42 (niedriger Druck im Steuerraum 60) ist die Abweichung des Ist-Teilstroms von dem Soll-Teilstrom größer als bei Einstellung eines kleinen Durchflussquerschnitts. Diese Mengenabweichung vom Sollwert kann bewusst dazu ausgenutzt werden, um beispielsweise bei einem Fahrantrieb einen Schlupf einzustellen. Bei Verringerung des Blendenquerschnitts erfolgt praktisch eine hydraulische Sperrung, da beide Hydromotoren 1, 2 mit im Wesentlichen der vorbestimmten Soll-Druckmittelmenge versorgt werden. Mit anderen Worten gesagt, bei Einstellung eines vergleichsweise großen Blendenquerschnitts wird der Druckmittelvolumenstrom nicht im Verhältnis 50:50 (Sperrwirkung) aufgeteilt, sondern beispielsweise im Verhältnis 45:55, so dass bewusst ein Schlupf zugelassen wird.

Wie aus Figur 1 ersichtlich, strömen die über die Gesamt-Messblende 12 eingestellten Druckmittel-volumenströme über die Zulaufleitungen 16, 18 zu den zugeordneten Druckwaagen 8, 10. Diese sind in ihrer dargestellten Grundposition geöffnet und werden durch den stromabwärts der Messblende 12 abgegriffenen Druck in Schließrichtung und in Öffnungsrichtung von dem höchsten Lastdruck in der Lastmeldeleitung 32 beaufschlagt. Das in Figur 1 dargestellte Wegeventil 34, 36 ist in einen Druckwaagenkolben der beiden Druckwaagen 8, 10 als Innenkolben integriert. Wie angedeutet, ist dieser Innenkolben mechanisch mit der Druckwaage verbunden. Auf die in Figur 1 linke Stirnfläche des Innenkolbens wirkt der Pumpendruck, während auf die rechte Stirnfläche des Innenkolbens der Druck im Druckmittelströmungspfad zwischen der Messblende 12 und den jeweiligen Druckwaagen 8 bzw. 10 wirkt. Beim "Teilen" wird der Innenkolben (Wegeventil 34, 36) gegen einen gehäusefesten Anschlag (rechts in Figur 1) bewegt, beim "Summieren" liegt der Innenkolben an dem in Figur 1 links dargestellten Anschlag an.

In der offenen Grundposition der Druckwaage 8, 10 wird über das entsprechend umgeschaltete Wegeventil 34, 36 der Druck zwischen der Messblende 12 und der lastdruckhöchsten Druckwaage 8 oder 10 in die LS-Leitung 32 gemeldet und liegt somit an allen Druckwaagen 8, 10 an. Beim Verschieben der Druckwaage aus der Öffnungsposition in eine Regelposition wird der Innenkolben der Wegeventile 34, 36 durch die mechanische Kopplung in eine der dargestellten Sperrpositionen verfahren, so dass der Druck im Druckmittelströmungspfad von der Messblende 12 zur jeweiligen Druckwaage 8, 10 nicht mehr abgegriffen werden kann. Der Druck in der Lastmeldeleitung 32 beaufschlagt auch die in Figur 1 rechte Stirnfläche des Innenkolbens des Wegeventils 34, 36.

Der Druckwaagenkolben der Druckwaagen 8, 10 ist einerseits durch den Druck im Lastmeldekanal 32 und anderseits durch den zwischen der Messblende 12 und der jeweiligen Druckwaage 8,10 abgegriffenen Druck beaufschlagt,
wobei der Druckmittelvolumenstrom bei Kräftegleichgewicht durch die Druckwaagen 8, 10 so angedrosselt wird, dass der Druckabfall über der Messblende 12 lastunabhängig konstant ist.

Beim Betriebszustand "Summieren" ist der Druck an den Anschlüssen A, B der Messblende 12 größer als der Druck am stirnseitigen Anschluss P. Durch den entsprechend höheren Druck im Steuerraum 60 wird der Messblendenkolben 52 in der Darstellung gemäß Figur 4 nach links geschoben, so dass über die Steuerkante 82 die Fenster 46, 42 gegen die Kraft der Zentrierfederanordnung 54 aufgesteuert und die Teilvolumenströme am Anschluss P summiert werden.

Beim "Summieren" strömt der Steuerölstrom von den Verbraucheranschlüssen A, B über die jeweiligen Blenden 72, 74, 76, 78, das Vorsteuerventil 20, die Steuerleitung 71, den Steuerraum 60, die Düse 64 und den Steuerkanal 62 als Nebenstrom zum Pumpenanschluss P. Ähnlich wie beim Betriebszustand "Teilen" kann zur Vergleichmäßigung der Druckmittelvolumenstromverteilung das Vorsteuerventil 20 in Schließrichtung verstellt werden, so dass der Nebenstrom vor dem Vorsteuerventil 20 angestaut und entsprechend der Nebenstrom über das Vorsteuerventil und die Düse 64 verringert wird. Damit wird auch der Druckabfall, verringert, so dass der Druck im Steuerraum 60 absinkt und entsprechend der Messblendenkolben 52 mehr schließt, als dies bei einem geöffneten Vorsteuerventil 20 der Fall wäre - d. h., der Messblendenkolben 52 wird in der Darstellung gemäß Figur 4 nach rechts in Schließrichtung und in der Darstellung gemäß Figur 2 nach oben in Schließrichtung bewegt, so dass der Druckmittelvolumenstrom in Richtung zur Pumpe angestaut und somit gleichmäßiger verteilt wird.

Während des Summierens werden die Innenkolben der beiden Wegeventile 34, 36 gegen den linken Anschlag (Figur 1) verschoben und entsprechend der lastniedrigste Druck in die Lastmeldeleitung 32 gemeldet. Hinsichtlich weiterer Details des Aufbaus und der Funktion der beiden Druckwaagen 8, 10 und der Wegeventile 34, 36 wird auf die eingangs genannte ältere Patentanmeldung der Anmelderin verwiesen.

Bei dem Ausführungsbeispiel gemäß Figur 1 ist die Zumessblende 12 mit zwei Fenstern zur Versorgung zweier Verbraucher 1, 2 ausgeführt, beim Ausführungsbeispiel gemäß Figur 2 können vier Verbraucher über vier Fenster versorgt werden; selbstverständlich können durch Variation der Anzahl der Fenster auch mehr Verbraucher versorgt werden, so dass das System praktisch auf beliebig viele Druckwaagenachsen erweiterbar ist. Die Messblende 12 kann auch ohne die Freilaufschaltung ausgeführt sein.

Bei den vorbeschriebenen Ausführungsbeispielen wurden Stromteiler/Summierer erläutert, bei denen jedem Verbraucher eine Druckwaage 8, 10 und mehreren Verbrauchern eine gemeinsame Summenblende zugeordnet ist. Bei einer derartigen Summenblende sind mehrere Messblenden an einem Messblendenkolben ausgebildet.

Im Folgenden wird ein Ausführungsbeispiel beschrieben, bei dem ein so genannter Stromteiler mit Einzelblenden ausgebildet ist, wobei jedem Messblendenkolben nur eine Messblende zugeordnet ist. D.h., der Kolben steuert nur einen Messblendenquerschnitt auf, so dass jedem Verbraucher eine individuelle Messblende zugeordnet ist. Eine derartige Schaltung kann beispielsweise bei einem Fahrantrieb verwendet werden, so dass jedes einzelne Rad getrennt ansteuerbar ist.

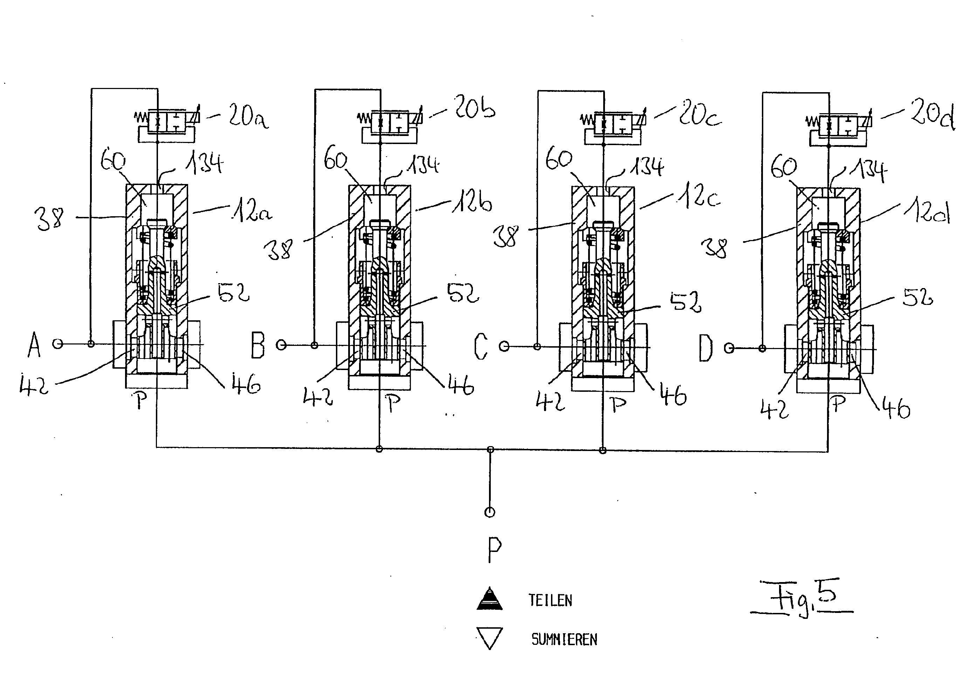

Figur 5 zeigt ein prinzipielles Schaltschema einer derartigen Steueranordnung mit Summenblende. Die Steueranordnung hat vier zweite Arbeitsanschlüsse A, B, C, D, denen jeweils eine Messblendenanordnung 12a, 12b, 12c, 12d und ein Vorsteuerventil 20a, 20b, 20c, 20d zugeordnet ist. Im Druckmittelströmungspfad zwischen dem Ausgangsanschluß der Messblendenanordnungen 12a, 12b, 12c, 12d und dem jeweiligen Verbraucheranschluss A, B, C, D sind genau wie beim vorbeschriebenen Ausführungsbeispiel jeweils eine Individualdruckwaage und ein Drucknachsaugventil ausgebildet, die in der Abbildung gemäß Figur 5 nicht dargestellt sind. Der Aufbau der Messblendenanordnung 12a, 12b, 12c, 12d entspricht im wesentlichen demjenigen, wie er in den Figuren 4 und 5 beschrieben ist mit der Ausnahme, dass am Messblendenkolben 52 nicht mehrere, jeweils eine Messblende ausbildende Fenster ausgebildet sind, sondern dass diese Fenster 42, 46 sämtlich hydraulisch mit den zugeordneten Anschluß A, B, C oder D verbunden sind. Dies kann beispielsweise dadurch bewirkt werden, dass in dem die Messblendenanordnung 12 aufnehmenden Block eine Ringnut ausgebildet ist, in der die Fenster einmünden. Alternativ kann anstelle der Abflachungen 42, 46 beim Ausführungsbeispiel gemäß Figur 4 eine umlaufende Ringnut verwendet werden. Wie beim vorbeschriebenen Ausführungsbeispiel strömt das Druckmittel beim Teilen von der Verstellpumpe 6 (siehe Figur 1) zu dem jeweiligen pumpenseitigen Arbeitsanschluß P und über die Fenster 42, 46 und die jeweils zugeordnete individuelle Druckwaage zum jeweiligen Arbeitsanschluß A, B, C, D und von dort zum zugeordneten Verbraucher.

Desweiteren ist in der Darstellung gemäß Figur 5 im Unterschied zu den vorbeschriebenen Ausführungsbeispielen die Messblendenanordnung 12a, 12b, 12c, 12d ohne Verschlußstopfen 124 ausgeführt und der Einfachheit halber mit stirnseitig geschlossener Messblendenbuchse 38 dargestellt, wobei der Durchbruch 134, über den der Steuerraum 60 mit dem zugeordneten Vorsteuerventil 20a, 20b, 20c, 20d verbunden ist, dem Manteldurchbruch 134 in Figur 4 entspricht.

Ein weiterer Unterschied der Messblendenanordnung gemäß Figur 5 zu den vorbeschriebenen Ausführungsbeispielen ist darin zu sehen, dass eine Verdrehsicherung des Messblendenkolbens 52 nicht erforderlich ist, da sämtliche Fenster 42, 46 ohnehin hydraulisch miteinander verbunden sind und somit keine vorbestimmte Drehwinkelposition des Messblendenkolbens 52 eingehalten werden muß.

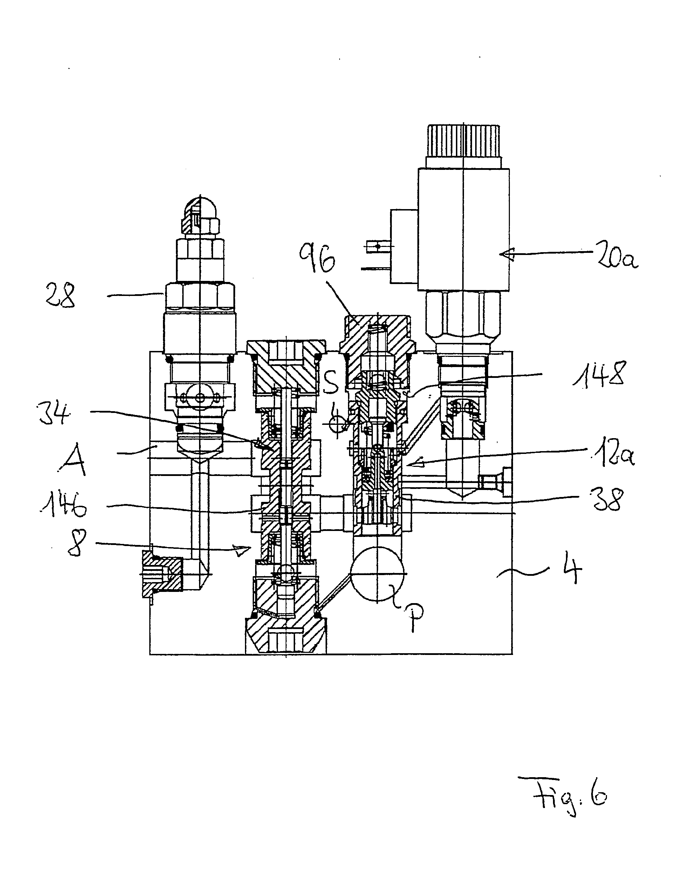

Figur 6 zeigt einen Teilschnitt durch einen Mobilsteuerblock 4, in den die jedem Verbraucher zugeordneten hydraulischen Bauelemente aufgenommen sind. Der Mobilsteuerblock 4 hat einen pumpenseitigen Druckanschluß P sowie einen Arbeitsanschluß A, der über eine Anschlußplatte mit dem Verbraucher verbunden ist.

Der Tankanschluß T ist in der Darstellung gemäß Figur 6 nicht sichtbar. Am Mobilsteuerblock 4 sind desweiteren noch Steueranschlüsse S und X ausgebildet. In den Mobilsteuerblock 4 sind die Messblendenanordnung 12a, das zugeordnete Vorsteuerventil 20a, die individuelle Druckwaage 8 und das Druckeinspeiseventil 28 eingesetzt. Der Aufbau der Meßblendenanordnung 12a entspricht im wesentlichen demjenigen, wie er aus den Figuren 3 und 4 entnehmbar ist. Die in Figur 6 dargestellte Messblendeanordnung 12a ist über eine Verschlußschraube 96 in einer Ventilbohrung des Mobilsteuerblocks 4 axial festgelegt. Die Messblendenbuchse 38 ist axial verschiebbar in der Ventilbohrung angeordnet und ist in ihre dargestellte Grundposition federvorgespannt und mit dem Steuerdruck am Arbeitsanschluß S in Öffnungsrichtung und mit dem Druck am Steueranschluß X in Schließrichtung beaufschlagt. Wie beim vorbeschriebenen Ausführungsbeispiel können durch Absenken des Steuerdrucks am Steueranschluß X der Mobilsteuerblöcke 38 sämtlicher Messblendenanordnungen 12a, 12b, 12c, 12d verschoben werden, um die Arbeitsanschlüsse A, B, C, D miteinander zu verbinden und den Freilauf einzustellen.

Die individuelle Druckwaage 8 ist in ihrer Grundstellung geöffnet und entspricht hinsichtlich des Aufbaus demjenigen, wie er in der Patentanmeldung DE 10 2004 001253 offenbart ist. Wie eingangs erwähnt, hat diese Druckwaage zwei Steuerkanten, von denen eine beim Summieren und die andere beim Teilen wirksam ist. In einen Druckwaagenkolben 146 der individuellen Druckwaage 8 ist das in Figur 1 dargestellte Schaltventil 34 integriert das einen Innenkolben hat, der im Druckwaagenkolben 146 verschiebbar geführt ist. Der Druckwaagenkolben 146 ist durch den Druck am Arbeitsanschluß P nach oben hin beaufschlagt. Der in Gegenrichtung auf den Druckwaagenkolben 146 wirkende Druck wird über das Wegeventil 34 aufgeschaltet. Hinsichtlich weiterer Details sei auf die vorgenannte ältere Patentanmeldung der Anmelderin verwiesen.

Das Druckeinspeiseventil 28 hat einen herkömmlichen Aufbau, so dass weitere Erläuterungen entbehrlich sind.

Bei den vorbeschriebenen Messblendenanordnungen 12 läßt sich der Freilauf auf sehr einfache Weise blockieren, in dem die Verschlussschraube 96 so ausgebildet wird, dass sie eine Axialbewegung der Messblendenbuchse 38 zum Einstellen des Freilaufs verhindert. Hierzu müßte bei dem Ausführungsbeispiel gemäß Figur 6 die eingeschraubte Ringstirnfläche 148 der Verschlussschraube 96 soweit verlängert werden, bis sie auf der benachbarten Ringstirnfläche der Messbuchse 38 aufliegt. Bei dem in Figur 3 dargestellten Ausführungsbeispiel müßte entsprechend eine Innenschulter 150 in Axialrichtung verlängert werden.

Bei dem eingangs beschriebenen Ausführungsbeispiel erfolgt die Verdrehsicherung des Messblendenkolbens über die in Radialrichtung eingesetzte und koaxial zum Vorsteuerventil 20 angeordnete Verdrehsicherung. Da bei dem Ausführungsbeispiel gemäß den Figuren 5 und 6 keine derartige Verdrehsicherung erforderlich ist, besteht keine Notwendigkeit, das Vorsteuerventil 20 um 90 ° versetzt zur Messblendenanordnung 12 dem Druckeinspeiseventil 28 und dem Vorsteuerventil 20 einzusetzen - demzufolge kann das Vorsteuerventil 20a achsparallel zur Messblendenanordnung 12 in den Mobilsteuerblock eingesetzt werden.

Da bei dem vorbeschriebenen Ausführungsbeispiel jedem Verbraucher eine eigene Messblendenanordnung zugeordnet ist, kann auf die Blenden (Düsen) 72, 74, 76, 78 verzichtet werden.

Für den Fall, dass zu den Verbrauchern stets unterschiedliche Mengen an Druckmittel gefördert werden sollen, kann die lichte Weite der Fenster der Messblendenbuchse 38 der Messblendenanordnung 12a, 12b, 12c, 12d in Abhängigkeit von diesem Druckmittelvolumenstrom strömen unterschiedlich gewählt werden. Prinzipiell ist natürlich auch möglich, bei der eingangs beschriebenen Summenblende die einzelnen Fenster 40, 42, 44, 46 mit unterschiedlichen Querschnitten auszulegen.

Offenbart ist eine veränderliche Messblendenanordnung für ein Stromteil- und Stromsummiergerät, wobei die Messblendenanordnung mit einem oder mehreren Arbeitsanschlüssen ausgebildet ist, über die jeweils ein Verbraucher mit Druckmittel versorgbar ist. Die Messblendenanordnung hat einen Messblendenkolben, der von einem Steuerdruck beaufschlagbar ist, der zwischen zwei Drosseln eines Druckteilers abgegriffen wird, wobei zumindest eine der Drosseln veränderbar ist.

### Bezugszeichenliste:

- 1: Hydromotor
- 2: Hydromotor
- 4: Mobilsteuerblock
- 6: Verstellpumpe
- 8: Druckwaage
- 10: Druckwaage
- 12: Messblende
- 14: Zulaufleitung
- 16: Vorlaufleitung
- 18: Vorlaufleitung
- 20: Vorsteuerventil
- 22: Freilaufeinrichtung
- 24: Hilfspumpe
- 26: Einspeiseleitung
- 28: Druckeinspeiseventil
- 30: Druckeinspeiseventil
- 32: Lastmeldeleitung
- 34: Wegeventil
- 36: Wegeventil
- 38: Messblendenbuchse
- 40: Fenster
- 42: Fenster
- 44: Fenster
- 46: Fenster
- 48: Vorlaufleitung
- 50: Vorlaufleitung
- 52: Messblendenkolben
- 54: Zentrierfederanordnung
- 56: untere Stirnfläche
- 58: obere Stirnfläche
- 60: Steuerraum
- 62: Steuerkanal
- 64: Düse
- 66: Ringnut
- 68: Ringraum
- 70: Querbohrung
- 71: Steuerleitung
- 72: Blende
- 74: Blende
- 76: Blende
- 78: Blende
- 80: Steuerkante
- 82: Steuerkante
- 84: Achse Vorsteuerventil
- 86: Achse Messblende
- 88: Ventilbohrung
- 90: Radialvorsprung
- 92: Feder
- 94: Schulter
- 96: Verschlussschraube
- 98: Zulaufkanal
- 100: Vorsteuerventilbohrung
- 101: Druckraum
- 102: Verdrehsicherung
- 103: Druckraum
- 104: Langloch
- 106: Ausgangsanschluss
- 108: Schrägkanal
- 110: Umfangsnut
- 112: Federraum
- 114: Steuerbohrung
- 116: Freilaufsteuerkante
- 118: Zentrierfeder
- 120: Axialvorsprung
- 122: Federteller
- 124: Verschlussstopfen
- 126: tassenförmiger Federteller
- 128: Radialschulter
- 130: Hemd
- 132: Hemdbohrung
- 134: Durchbruch
- 136: Ringschulter
- 138: Endabschnitt
- 140: Kolbenbohrung
- 142: Axialbohrung
- 144: Querbohrung
- 146: Druckwaagenkolben
- 148: Ringstirnfläche
- 150: Innenschulter

## Patentansprüche

1. Messblendenanordnung für ein hydraulisches Stromteil-und Stromsummiergerät mit einem Messblendenkolben (52), der eine oder mehrere, parallel zueinander liegende veränderbare Meßblenden (40, 42, 44, 46) für jede Stromrichtung steuert, von denen jede zwischen einem gemeinsamen ersten Arbeitsanschluss (P) und einem verbraucherseitigen zweiten Arbeitsanschluss (A, B, C, D) angeordnet ist, und der von dem Druck im ersten Anschluss (P) in eine erste Richtung beaufschlagt ist, mit einer verstellbaren Druckteilerschaltung (20, 64) zwischen dem ersten Anschluss (P) und den Arbeitsanschlüssen (A, B, C, D), die zur Erzeugung eines in seiner Höhe zwischen dem Druck im ersten Anschluss (P) und dem Druck in den Arbeitsanschlüssen (A, B, C, D) liegenden Steuerdrucks, von dem der Messblendenkolben (52) in eine der ersten Richtung entgegengesetzten, zweiten Richtung beaufschlagbar ist, mindestens zwei Drosseln (20, 64) aufweist, und mit einer Zentrierfederanordnung (54) durch die der Messblendenkolben (52) in einer Mittelstellung, in der die Messblenden (40, 42, 44, 46) geschlossen sind, zentriert ist, **dadurch gekennzeichnet, dass** der Durchflussquerschnitt zumindest einer der zwei Drosseln (20, 64) der Druckteilerschaltung (64, 20) veränderbar ist.

2. Messblendenanordnung nach Patentanspruch 1, wobei die veränderbare Drossel ein stetig oder stufenweise verstellbares Vorsteuerventil (20) ist.

3. Messblendenanordnung nach Patentanspruch 2, wobei eine feste Drossel (64) der Druckteilerschaltung in einem Steuerölströmungspfad zwischen dem ersten Anschluss (P) und dem Vorsteuerventil (20) angeordnet ist.

4. Messblendenanordnung nach einem der vorhergehenden Patentansprüche, wobei der Messblendenkolben (52) in einer Messblendenbuchse (38) geführt ist, in der jeweils einem der Arbeitsanschlüsse (A, B, C, D) zugeordnete, jeweils eine Messblende ausbildende Fenster (40, 42, 44, 46) angeordnet sind, die mittels des Messblendenkolbens (52) aufsteuerbar sind.

5. Messblendenanordnung nach Patentanspruch 4, wobei die Fenster (40, 42, 44, 46) unterschiedliche Querschnitte aufweisen.

6. Messblendenanordnung nach einem der Patentansprüche 1 bis 5, wobei der Messblendenkolben (52) zwei Steuerkanten (80, 82) hat, von denen eine Teilen-Steuerkante (80) beim Teilen und eine Summieren-Steuerkante (82) beim Summieren wirksam ist.

7. Messblendenanordnung nach Patentanspruch 6, wobei die Summieren-Steuerkante (82) durch eine Ringnut (66) des Messblendenkolbens (52) ausgebildet ist.

8. Messblendenanordnung nach Patentanspruch 7, wobei stirnseitig im Messblendenkolben (52) eine Vielzahl von Axialbohrungen (142) ausgebildet sind, die in der Ringnut (66) münden.

9. Messblendenanordnung nach einem der auf Patentanspruch 3 bezogenen Ansprüche, wobei der Messblendenkolben (52) von einem Steuerkanal (140) durchsetzt ist, in dem die Düse (64) angeordnet ist, und der in einem Steuerraum (60) mündet.

10. Messblendenanordnung nach einem der Patentansprüche 2 und 9, wobei der Steuerraum (60) über eine Steuerleitung (71) und das Vorsteuerventil (20) mit einer an einen Arbeitsanschluss (A, B, C, D) angeschlossenen Vorlaufleitung (16, 18) verbindbar ist.

11. Messblendenanordnung nach Patentanspruch 10, wobei das Vorsteuerventil (20) proportional oder stufenförmig verstellbar ist.

12. Messblendenanordnung nach Patentanspruch 10 oder 11, wobei die Steuerleitung (71) zu jeder Vorlaufleitung (16, 18) verzweigt und in jeder Zweigleitung eine Blende (72, 74, 76, 78) angeordnet ist.

13. Messblendenanordnung nach einem der vorhergehenden Patentansprüche, wobei die Zentrierfederanordnung (54) über einen tassenförmigen Federteller (126) an einer Schulter des Messblendenkolbens (52) angreift, wobei der Federteller (126) ein Hemd (136) hat, das einen Aufnahmeraum für einen Endabschnitt einer Zentrierfeder (118) bildet, der über zumindest eine Hemdbohrung (132) mit dem Steuerraum (60) verbunden ist.

14. Messblendenanordnung nach einem der auf Anspruch 4 zurückbezogenen Patentansprüche, wobei die Messblendenbuchse (38) gleitend in einer Ventilbohrung (88) eines Mobilsteuerblocks (4) eingesetzt und in eine Grundstellung vorgespannt ist, wobei in der Ventilbohrung (88) zumindest ein mit den Arbeitsanschlüssen (A, B, C, D) verbundener Ablaufkanal mündet, der in der Grundstellung von einem zumindest ein Fenster (40, 42, 44, 46) aufweisenden Endabschnitt der Messblendenbuchse (38) überdeckt sind, wobei eine Stirnfläche der Messblendenbuchse einen Federraum (112) begrenzt, der mit einem Steuerdruck beaufschlagbar ist, so dass die Messblendenbuchse (38) bei Anliegen des Steuerdrucks in eine Grundposition vorgespannt ist und bei Absenken des Steuerdrucks aus dieser Grundstellung in eine Freilaufposition verschiebbar ist, in der die Vorlaufkanäle vom Endabschnitt der Messblendenbuchse (38) aufgesteuert und somit untereinander verbunden sind.

15. Messblendenanordnung nach 14, wobei der Axialhub der Messblendenbuchse (58) durch Einschrauben einer Verschlussschraube (96) blockiert ist.

16. Messblendenanordnung nach einem der vorhergehenden Patentansprüche, wobei eine Vorsteuerventilachse (84) rechtwinklig zu einer Messblendenachse (86) verläuft und diese schneidet.

17. Messblendenanordnung nach Patentanspruch 16, wobei die Messblendenbuchse (38) an ihrem Außenumfang ein Langloch (104) hat, in die eine Verdrehsicherung (102) eintaucht, die koaxial zum Vorsteuerventil (20) angeordnet ist.

18. Stromteil- und Summiergerät mit zumindest zwei Verbrauchern (1,2), das zum Teilen eines Druckmittelvolumenstroms in einer Richtung und zum Summieren von Teilströmen in Gegenrichtung durchströmbar ist, mit jeweils einem der Verbraucher (1, 2) zugeordneten Druckwaagen (8, 10) und mit einer Messblendenanordnung, mit Merkmalen zumindest eines der vorhergehenden Patentansprüche, wobei jeweils eine Meßblende (40, 42, 44, 46) mehreren oder einem Verbraucher zugeordnet ist.

## Claims

1. A metering orifice arrangement for a hydraulic current divider and current adding device comprising a metering orifice piston (52) which controls one or more variable metering orifices (40, 42, 44, 46) located in parallel to each other for each flow direction, each of which metering orifices is arranged between a common first working terminal (P) and a second working terminal (A, B, C, D) at the consumer side, and to which the pressure prevailing in the first terminal (P) is applied in a first direction, comprising an adjustable pressure dividing circuit (20, 64) between the first terminal (P) and the working terminals (A, B, C, D) including at least two throttles (20, 64) for generating a control pressure lying between the pressure prevailing in the first terminal (P) and the pressure prevailing in the working terminals (A, B, C, D) which can be applied to the metering orifice piston (52) in a second direction opposed to the first direction, and comprising a centering spring arrangement (54) by which the metering orifice piston (52) is centered in a central position in which the metering orifices (40, 42, 44, 46) are closed, **characterized in that** the flow cross-section of at least one of the two throttles (20, 64) of the pressure dividing circuit (64, 20) is variable.

2. A metering orifice arrangement according to claim 1, wherein the variable throttle is a continuously or stepwise adjustable pilot valve (20).

3. A metering orifice arrangement according to claim 2, wherein a fixed throttle (64) of the pressure dividing circuit is disposed in a control oil flow path between the first terminal (P) and the pilot valve (20).

4. A metering orifice arrangement according to any one of the preceding claims, wherein the metering orifice piston (52) is guided in a metering orifice sleeve (38) in which windows (40, 42, 44, 46) allocated to each of the working terminals (A, B, C, D) and each forming a metering orifice are arranged which can be controlled to be opened by means of the metering orifice piston (52).

5. A metering orifice arrangement according to claim 4, wherein the windows (40, 42, 44, 46) have different cross-sections.

6. A metering orifice arrangement according to any one of the claims 1 to 5, wherein the metering orifice piston (52) includes two control edges (80, 82) a dividing control edge (80) of which is active during dividing and an adding control edge (82) is active during adding.

7. A metering orifice arrangement according to claim 6, wherein the adding control edge (82) is formed by an annular groove (66) of the metering orifice piston (52).

8. A metering orifice arrangement according to claim 7, wherein at the front in the metering orifice piston (52) a plurality of axial bores (142) opening into the annular groove (66) is formed.

9. A metering orifice arrangement according to any one of the claims related back to claim 3, wherein a control passage (140) in which the nozzle (64) is disposed and which opens into a control chamber (60) passes through the metering orifice piston (52).

10. A metering orifice arrangement according to any one of the claims 2 and 9, wherein the control chamber (60) can be connected via a control conduit (71) and the pilot valve (20) to an advance conduit (16, 18) connected to a working terminal (A, B, C, D).

11. A metering orifice arrangement according to claim 10, wherein the pilot valve (20) is proportionally or stepwise adjustable.

12. A metering orifice arrangement according to claim 10 or 11, wherein the control conduit (71) is branched to each advance conduit (16, 18) and an orifice (72, 74, 76, 78) is disposed in each branch conduit.

13. A metering orifice arrangement according to any one of the preceding claims, wherein the centering spring arrangement (54) acts upon a shoulder of the metering orifice piston (52) via a cup-shaped spring plate (126), wherein the spring plate (126) includes a shroud (136) forming a receiving chamber for an end portion of a centering spring (118) which is connected to the control chamber (60) via at least one shroud bore (132).

14. A metering orifice arrangement according to any one of the claims related back to claim 4, wherein the metering orifice sleeve (38) is slidingly inserted in a valve bore (88) of a mobile control block (4) and is biased into a home position, wherein at least one discharge passage connected to the working terminals (A, B, C, D) opens into the valve bore (88), which discharge passage is covered in the home position by an end portion of the metering orifice sleeve (38) including at least one window (40, 42, 44, 46), an end face of the metering orifice sleeve confining a spring chamber (112) to which a control pressure can be applied so that the metering orifice sleeve (38) is biased into a home position when a control pressure is applied and, when the control pressure is reduced, can be shifted from said home position into a free-running position in which the advance passages are controlled to be opened by the end portion of the metering orifice sleeve (38) and are thus interconnected.

15. A metering orifice arrangement according to claim 14, wherein the axial stroke of the metering orifice sleeve (58) is blocked by screwing in a screw plug (96).

16. A metering orifice arrangement according to any one of the preceding claims, wherein a pilot valve axis (84) extends at right angles to a metering orifice axis (86) and intersects the same.

17. A metering orifice arrangement according to claim 16, wherein the metering orifice sleeve (38) at its outer circumference includes an oblong hole (104) into which a torsion protection (102) immerses which is disposed coaxially with respect to the pilot valve (20).

18. A flow dividing and adding device comprising at least two consumers (1, 2) which can be flown through for dividing a pressure fluid volume flow in one direction and for adding partial flows in the opposite direction, comprising pressure regulators (8, 10) allocated to each consumer (1, 2) and comprising a metering orifice arrangement comprising the features of at least one of the preceding claims, wherein a measuring orifice (40, 42, 44, 46) at a time is allocated to plural consumers or to one consumer.

## Revendications

1. Dispositif de diaphragmes de mesure pour un appareil hydraulique de division et d'addition de débits avec un piston de diaphragmes de mesure (52) qui commande un ou plusieurs diaphragmes de mesure variables disposés parallèlement les uns aux autres (40, 42, 44, 46) pour chaque sens d'écoulement dont chacun est disposé entre un premier raccord de travail commun (P) et un second raccord de travail (A, B, C, D) du côté du consommateur et qui est alimenté dans une première direction par la pression dans le premier raccord (P), avec un circuit de division de pression réglable (20, 64) entre le premier raccord (P) et les raccords de travail (A, B, C, D) qui comporte au moins deux clapets d'étranglement (20, 64) pour la génération d'une pression de commande dont la hauteur est comprise entre la pression dans le premier raccord (P) et la pression dans les raccords de travail (A, B, C, D) par laquelle le piston de diaphragmes de mesure (52) peut être alimenté dans une seconde direction opposée à la première direction, et avec un dispositif de ressort de centrage (54) au moyen duquel le piston de diaphragmes de mesure (52) est centré dans une position intermédiaire dans laquelle les diaphragmes de mesure (40, 42, 44, 46) sont fermés, **caractérisé en ce que** la section de passage d'au moins l'un des deux clapets d'étranglement (20, 64) du circuit de division de pression est variable.

2. Dispositif de diaphragmes de mesure selon la revendication 1, dans lequel le clapet d'étranglement est un clapet pilote (20) réglable en continu ou par paliers.

3. Dispositif de diaphragmes de mesure selon la revendication 2, dans lequel un clapet d'étranglement fixe (64) du circuit de division de pression est disposé dans une voie d'écoulement d'huile de commande entre le premier raccord (P) et le clapet pilote (20).

4. Dispositif de diaphragmes de mesure selon l'une quelconque des revendications précédentes, dans lequel le piston de diaphragmes de mesure (52) est guidé dans une douille de diaphragmes de mesure (38) dans laquelle sont disposées des fenêtres (40, 42, 44, 46), chacune associée à l'un des raccords de travail (A, B, C, D), chacune constituant un diaphragme de mesure, qui peuvent être commandées en ouverture à l'aide du piston de diaphragmes de mesure (52).

5. Dispositif de diaphragmes de mesure selon la revendication 4, dans lequel les fenêtres (40, 42, 44, 46) présentent des sections transversales différentes.

6. Dispositif de diaphragmes de mesure selon l'une quelconque des revendications 1 à 5, dans lequel le piston de diaphragmes de mesure (52) comporte deux arêtes de commande (80, 82) dont une arête de commande de division (80) est active lors de la division et une arête de commande d'addition (82) est active lors de l'addition.

7. Dispositif de diaphragmes de mesure selon la revendication 6, dans lequel l'arête de commande d'addition (82) est constituée par une rainure annulaire (66) du piston de diaphragmes de mesure (52).

8. Dispositif de diaphragmes de mesure selon la revendication 7, dans lequel une pluralité d'alésages axiaux (142), qui débouchent dans la rainure annulaire (66), est formée dans le piston de diaphragmes de mesure (52).

9. Dispositif de diaphragmes de mesure selon l'une quelconque des revendications se rapportant à la revendication 3, dans lequel le piston de diaphragmes de mesure (52) est traversé par un conduit de commande (140) dans lequel est agencée la buse (64) et qui débouche dans un espace de commande (60).

10. Dispositif de diaphragmes de mesure selon l'une quelconque des revendications 2 et 9, dans lequel l'espace de commande (60) peut être relié à une canalisation montante (16, 18) raccordée à un raccord de travail (A, B, C, D) par l'intermédiaire d'une canalisation de commande (71) et du clapet pilote (20).

11. Dispositif de diaphragmes de mesure selon la revendication 10, dans lequel le clapet pilote (20) est réglable de manière proportionnelle ou par paliers.

12. Dispositif de diaphragmes de mesure selon la revendication 10 ou 11, dans lequel la canalisation de commande (71) est dérivée vers chaque canalisation montante (16, 18) et un diaphragme (72, 74, 76, 78) est disposé dans chaque dérivation.

13. Dispositif de diaphragmes de mesure selon l'une quelconque des revendications précédentes, dans lequel le dispositif de ressort de centrage (54) vient en prise dans un épaulement du piston de diaphragmes de mesure (52) par l'intermédiaire d'une cuvette de ressort en forme de tasse (126), la cuvette de ressort (126) comportant une chemise (136) qui forme un espace de réception pour un tronçon d'extrémité d'un ressort de centrage (118) qui est relié à l'espace de commande (60) par l'intermédiaire d'au moins un alésage de chemise (132).

14. Dispositif de diaphragmes de mesure selon l'une quelconque des revendications se rapportant à la revendication 4, dans lequel la douille de diaphragmes de mesure (38) est insérée de manière coulissante dans un alésage de clapet (88) d'un bloc de commande mobile (4) et est précontrainte dans une position de base, au moins une conduite d'évacuation reliée aux raccords de travail (A, B, C, D), qui, dans la position de base, est recouverte par un tronçon d'extrémité de la douille de diaphragmes de mesure (38) comportant au moins une fenêtre (40, 42, 44, 46), débouchant dans l'alésage de clapet (88), une face frontale de la douille de diaphragmes de mesure délimitant un compartiment de ressort (112) qui peut être alimenté par une pression de commande de sorte que la douille de diaphragmes de mesure (38) est précontrainte dans une position de base lorsque la pression de commande est appliquée et, lorsque la pression de commande diminue, elle peut être déplacée à partir de cette position de base dans une position d'écoulement libre dans laquelle les canalisations montantes sont commandées en ouverture par le tronçon d'extrémité de la douille de diaphragmes de mesure (38) et sont ainsi reliées les unes aux autres.

15. Dispositif de diaphragmes de mesure selon la revendication 14, dans lequel la course axiale de la douille de diaphragmes de mesure (38) est bloquée par le serrage d'une vis de fermeture (96).

16. Dispositif de diaphragmes de mesure selon l'une quelconque des revendications précédentes, dans lequel un axe du clapet pilote (84) s'étend à angles droits par rapport à un axe de diaphragme de mesure (86) et coupe celui-ci.

17. Dispositif de diaphragmes de mesure selon la revendication 16, dans lequel la douille de diaphragmes de mesure (38) comporte sur son pourtour extérieur un trou oblong (104) dans lequel s'enfonce un dispositif de sécurité antitorsion (102) qui est disposé coaxialement au clapet pilote (20).

18. Appareil de division et d'addition de débits avec au moins deux consommateurs (1, 2), qui peut être traversé pour la division d'un débit volumétrique d'un fluide sous pression dans un sens et pour l'addition de débits partiels dans le sens opposé, avec des balances de pression (8, 10) associées chacune à l'un des consommateurs (1, 2) et avec un dispositif de diaphragmes de mesure, avec les caractéristiques d'au moins l'une quelconque des revendications précédentes, dans lequel un diaphragme de mesure (40, 42, 44, 46) est respectivement associé à plusieurs consommateurs ou à un consommateur.
